# EUROPEAN PATENT APPLICATION

(11) **EP 3 593 691 A1**
(43) Date of publication of application: **15.01.2020**
(21) Application number: 17899288.9
(22) Date of filing: 20.11.2017
(51) Int. Cl.: A47L 9/28, G01N 7/00

(54) **SELF-PROPELLED MOVABLE BODY, HUMIDITY SENSOR, LIQUID DETECTION DEVICE**

(30) Priority: 08.03.2017 JP 2017043967
(71) Applicant: Omron Corporation, Kyoto-shi, Kyoto 600-8530 (JP)
(72) Inventor: MIYAMOTO, Hiroyuki, Kyoto-shi Kyoto 600-8530 (JP)
(74) Representative: Kilian Kilian & Partner
(86) International application number: PCT/JP2017/041696
(87) International publication number: WO 2018/163521

(57) **Abstract**

An embodiment of the present invention detects liquid (or a solid containing much liquid) while neither a device nor a place where the liquid is absent becomes dirty, in a case where the liquid is present on a detection-target surface. A self-propelled cleaner (1) includes: a humidity sensor (16) configured to detect a humidity in a vicinity of the self-propelled cleaner (1); and a control section (20) configured to control an operation of the self-propelled cleaner (1) with reference to a result of detection by the humidity sensor (16).

## Description

### Technical Field

The present invention relates to a self-propelled moving body, a humidity sensor, and a liquid detection device.

### Background Art

Patent Literature 1 discloses a self-propelled cleaner which (i) moves in a self-propelled manner while getting around an obstacle and (ii) performs cleaning.

Moreover, Patent Literature 2 discloses a cleaner which detects whether liquid is present in dust after the dust is sucked into the cleaner, and then, stops a cleaning operation and sounds an alarm or the like in a case where the presence of the liquid is detected.

### Citation List

### [Patent Literature]

[Patent Literature 1]
   Japanese Patent Application Publication *Tokukai* No. 2014-176762 (Publication date: September 25, 2014)
[Patent Literature 2]
   Japanese Patent Application Publication *Tokukai* No. 2015-54185 (Publication date: March 23, 2015)

### Summary of Invention

### Technical Problem

Assume a case where while the self-propelled cleaner is moving, a brush or a wheel of the self-propelled cleaner becomes dirty due to liquid (e.g., excreta of a pet) on a floor which is to be cleaned. In such a case, the self-propelled cleaner whose brush or wheel is dirty moves in a room. This may make an entire part of the room dirty.

Since a technique as disclosed in Patent Literature 2 detects whether liquid is present in dust after the dust has been sucked into the cleaner, it is unavoidable to take the liquid into the cleaner. Further, the technique disclosed in Patent Literature 2 assumes that a user is present near the cleaner. This is clear from the fact that the cleaner is configured to stop a cleaning operation and sound an alarm or the like in a case where the presence of liquid is detected. On this account, cleaning cannot be finished while the user is absent.

An object of an aspect of the present invention is to make it possible to detect liquid (or a solid containing much liquid) while neither a device nor a place where the liquid is absent becomes dirty, in a case where the liquid is present on a detection-target surface.

### Solution to Problem

In order to solve the above problem, a self-propelled cleaner in accordance with an aspect of the present invention, includes: a humidity sensor configured to detect a humidity in a vicinity of the self-propelled cleaner; and a control section configured to control an operation of the self-propelled moving body with reference to a result of detection by the humidity sensor.

### Advantageous Effects of Invention

An object of an aspect of the present invention advantageously makes it possible to detect liquid (or a solid containing much liquid) while neither a device nor a place where the liquid is absent becomes dirty, in a case where the liquid is present on a detection-target surface.

### Brief Description of Drawings

Fig. 1 is an external view of a self-propelled cleaner in accordance with an embodiment of the present invention.
Fig. 2 is a block diagram illustrating functions of main parts of a self-propelled cleaner in accordance with an embodiment of the present invention.
Fig. 3 is a graph showing an example of a change in humidity over time in a case where liquid is present on a floor.
Fig. 4 is a graph showing an example of a change in humidity with respect to a distance between a floor and a humidity sensor in a case where liquid is present on the floor.
Fig. 5 is a flowchart illustrating an example control of a self-propelled cleaner in accordance with an embodiment of the present invention.

### Description of Embodiments

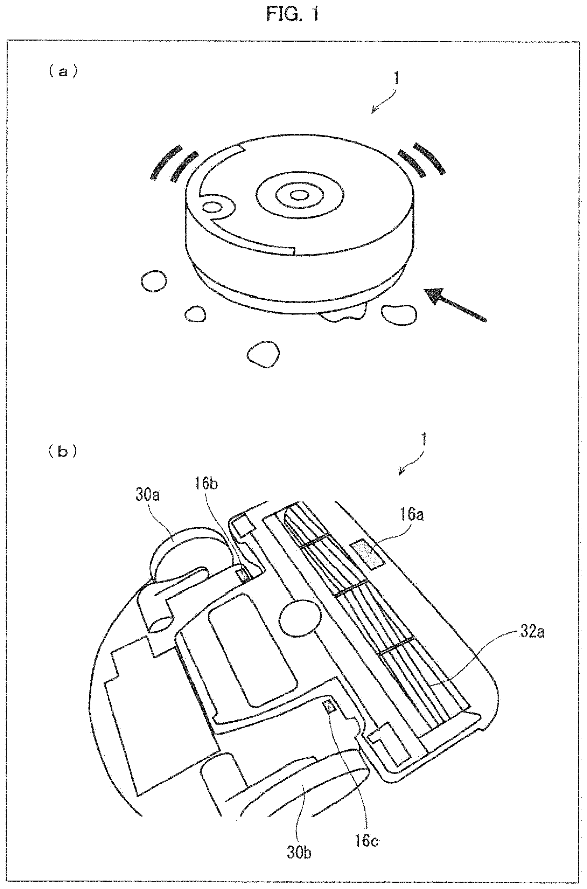

(a) of Fig. 1 is an external view of a self-propelled cleaner (self-propelled moving body) 1 in accordance with an embodiment of the present invention. (b) of Fig. 1 is a perspective view of a bottom surface of the self-propelled cleaner 1 in accordance with an embodiment of the present invention when the bottom surface is viewed from a direction which is indicated by an arrow in (a) of Fig. 1.

As illustrated in (b) of Fig. 1, the self-propelled cleaner 1 includes humidity sensors 16a, 16b, and 16c, wheels 30a and 30b, and a suction opening 32a. The humidity sensors 16a, 16b, and 16c are provided at bottom portions of the self-propelled cleaner 1. Moreover, the humidity sensors 16a, 16b, and 16c are provided on a front side relative to the wheels 30a and 30b in a moving direction of the self-propelled cleaner 1. Further, the humidity sensor 16a is provided on a front side relative to the suction opening 32a in the moving direction. Furthermore, the humidity sensors 16a, 16b, and 16c are provided so that a distance between each of the humidity sensors 16a, 16b, and 16c and a surface to be cleaned (detection-target surface) will be not more than 20 mm.

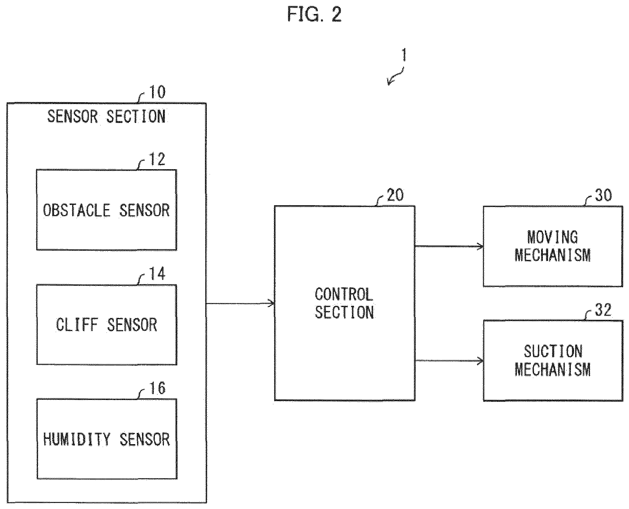

Fig. 2 is a block diagram illustrating functions of main parts of the self-propelled cleaner 1 in accordance with an embodiment of the present invention.

As illustrated in Fig. 2, the self-propelled cleaner 1 includes a sensor section 10, a control section 20, a moving mechanism 30, and a suction mechanism 32.

The sensor section 10 includes an obstacle sensor 12, a cliff sensor 14, and a humidity sensor 16 (three humidity sensors 16a, 16b, and 16c as illustrated in (b) of Fig, 1, in the present embodiment).

The obstacle sensor 12 detects obstacles, such as furniture, a wall, and the like, which hinder the self-propelled cleaner 1 from moving, and sends a signal indicative of a result of this detection to the control section 20.

The cliff sensor 14 detects a bump (change in level) on the surface to be cleaned, and sends a signal indicative of a result of this detection to the control section 20.

The humidity sensor 16 detects a humidity in the vicinity of the self-propelled cleaner 1, and sends a signal indicative of a result of this detection to the control section 20.

The control section 20 controls respective operations of the moving mechanism 30 and the suction mechanism 32, with reference to respective results of detection by the obstacle sensor 12, the cliff sensor 14, and the humidity sensor 16. In particular, with reference to the result of detection by the humidity sensor 16, the control section 20 determines whether or not liquid or an obstacle containing liquid is present on the surface to be cleaned, depending on whether or not the humidity in the vicinity of the self-propelled cleaner 1 changes by not less than a predetermined threshold.

The moving mechanism 30 causes the self-propelled cleaner 1 to move. The moving mechanism 30 includes the wheels 30a and 30b (see (b) of Fig. 1), a moving motor (not illustrated), and the like.

The suction mechanism 32 sucks the surface to be cleaned, so that dust on the surface to be cleaned is sucked into the cleaner. The suction mechanism 32 includes the suction opening 32a (see (b) of Fig. 1), a suction motor (not illustrated), and the like. As illustrated in (b) of Fig. 1, the suction opening 32a is provided with a rotating brush.

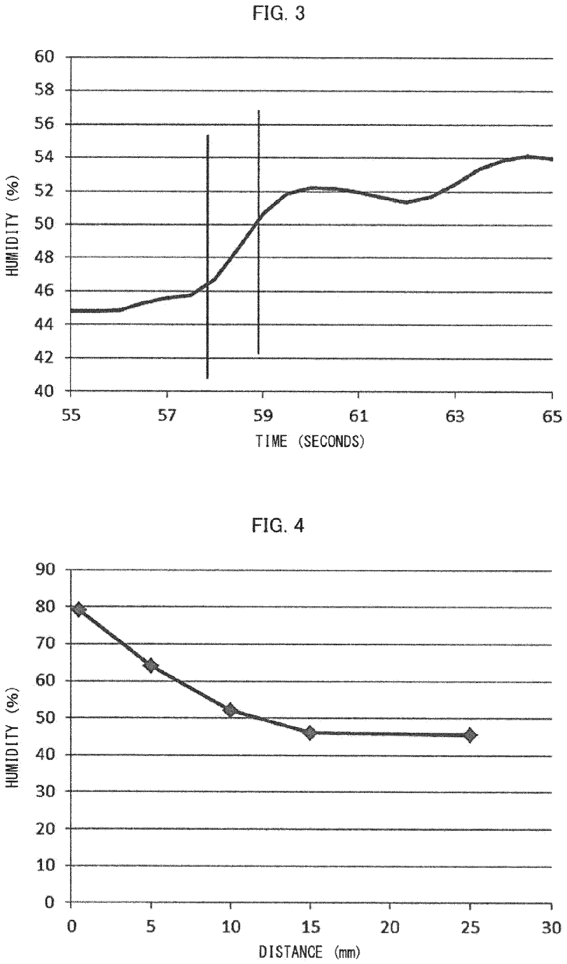

The following will discuss an example of a change in humidity over time in a case where liquid is present on a floor, with reference to Fig. 3. The humidity is detected by use of the humidity sensor 16 which is provided in the self-propelled cleaner 1 in accordance with the present embodiment. In a graph of Fig. 3, a horizontal axis represents time (unit: seconds) and a vertical axis represents a humidity (unit: %). As shown in Fig. 3, the humidity changes by approximately 5% within approximately one second, in a case where liquid is present on the floor. In other words, in a case where an abrupt change in humidity occurs during constant monitoring of the humidity, it can be determined that liquid or an obstacle containing liquid is present on the floor. Accordingly, the control section 20 can determine whether or not liquid or an obstacle containing liquid is present on the floor, by determining whether or not a change in humidity is not less than a predetermined threshold. In a case where the change in humidity is determined at time intervals of one second, the predetermined threshold can be set to 5%. For example, in a case where only whether the humidity is larger or smaller than a set value is determined, a result of determination is dependent on an environment of a space where a target to be cleaned is present. In contrast, in a case where a local change in humidity is caught as in the present embodiment, it is possible to reliably determine the presence of liquid or an obstacle containing liquid.

Typical examples of the humidity sensor here include (a) a psychrometer with a board, an Assmann's aspiratory psychrometer, etc., which psychrometers utilize a dry-bulb temperature and a wet-bulb temperature, and (b) a resistance humidity sensor, a capacitance-change humidity sensor, etc., which humidity sensors utilize an electrical change. With a humidity sensor which utilizes an electrical change, a humidity is electrically measured. This measurement is characterized by that the same value can be indicated regardless of who measures and that anyone can readily measure the humidity. Among others, the capacitance-change humidity sensor is preferably used. This is because (i) the capacitance-change humidity sensor has a feature that a response speed is faster than those of other humidity sensors and (ii) the humidity sensor 16 of the present embodiment needs to catch an abrupt change in humidity.

Next, with reference to Fig. 4, the following will discuss an example of a change in humidity with respect to a distance between a floor and the humidity sensor 16 in a case where liquid is present on a surface to be cleaned. In a graph of Fig. 4, a horizontal axis represents the distance between the surface to be cleaned and the humidity sensor 16 (unit: mm), and a vertical axis represents a humidity (unit: %). As shown in Fig. 4, the change in humidity is larger when the distance between the surface to be cleaned and the humidity sensor 16 is not more than 20 mm. In such a case, it is easy to determine whether or not liquid or an obstacle containing liquid is present. Therefore, the humidity sensor 16 is provided so that the distance between the humidity sensor 16 and the surface to be cleaned will be not more than 20 mm.

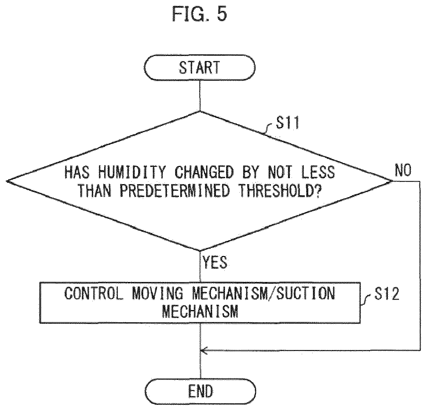

Next, the following will discuss, with reference to a flowchart of Fig. 5, an example control of self-propelled movement of the self-propelled cleaner 1 in accordance with the present embodiment, which example control is carried out by the control section 20.

The control section 20 determines, with reference to the result of detection by the humidity sensor 16, whether or not the humidity in the vicinity of the self-propelled cleaner 1 has changed by not less than a predetermined threshold (step S11). In a case where in step S11, the control section 20 determines that the change in humidity is not less than the predetermined threshold (YES in step S11), the step proceeds to step S12. In this case, the control section 20 determines that liquid or an obstacle containing liquid is present on the surface to be cleaned, and then controls the moving mechanism 30 and the suction mechanism 32 (step S12). The control section 20 can control the moving mechanism 30 so as to change a moving route of the self-propelled cleaner 1 or can control the suction mechanism 32 so as to cause the suction mechanism 32 to temporarily stop suction. In a case where the suction by the suction mechanism 32 is temporarily stopped, the control section 20 can cause the suction mechanism 32 to restart suction when the humidity decreases to a value lower than a preset value. Alternatively, the control section 20 can change both of control on the moving mechanism 30 and control on the suction mechanism 32.

In contrast, in a case where in step S11, the control section 20 determines that the change in humidity is less than the predetermined threshold (NO in step S11), the control section 20 continues the controls on the moving mechanism 30 and the suction mechanism 32 which controls are not changed.

As described above, the self-propelled cleaner 1 in accordance with the present embodiment is capable of detecting the presence of liquid or an obstacle containing liquid while the liquid or the obstacle containing liquid is not taken into the self-propelled cleaner 1. Therefore, the self-propelled cleaner 1 itself does not become dirty due to the liquid or the obstacle containing liquid. Further, the self-propelled cleaner 1 can finish cleaning while the self-propelled cleaner 1 does not make an entire room dirty by the liquid or the obstacle containing liquid.

Further, the self-propelled cleaner 1 in accordance with the present embodiment can move so as not to enter, for example, a bath etc. In other words, the self-propelled cleaner 1 in accordance with the present embodiment does not come into contact with liquid or an obstacle containing liquid, so that the self-propelled cleaner 1 never breaks down due to liquid.

In addition, the self-propelled moving body in accordance with an embodiment of the present invention can be applied to a robot (such as a security robot) which moves around in a room, a vehicle, etc.

The present embodiment applies, to a self-propelled moving body, a system which carries out contactless detection of liquid by use of a humidity sensor. This system can be also applied to any liquid detection device which is not self-propelled and which detects leaked water or the like. In the liquid detection device in this case, as in the case of the self-propelled moving body described earlier, (i) the humidity sensor for detecting a humidity in the vicinity of the liquid detection device is provided so that a distance between the humidity sensor and a detection-target surface will be not more than 20 mm, and (ii) an operation of the liquid detection device is controlled with reference to a result of detection by the humidity sensor.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows.

A self-propelled cleaner in accordance with an aspect of the present invention, includes: a humidity sensor configured to detect a humidity in a vicinity of the self-propelled cleaner; and a control section configured to control an operation of the self-propelled moving body with reference to a result of detection by the humidity sensor.

In some cases, the self-propelled cleaner is expected to finish cleaning while a user of the self-propelled cleaner is absent. However, for example, in a case where a user keeps a pet in a room, the pet may defecate or urinate on a floor while the user is absent. In a case like this, there may be a situation in which, while liquid which is unexpected to the user is present on a detection-target surface as described above, the self-propelled cleaner performs cleaning.

In such a situation, with the above configuration, the operation of the self-propelled cleaner is controlled with reference to the result of detection by the humidity sensor. Therefore, even in a case where liquid is present on a detection-target surface, the self-propelled cleaner can finish cleaning while neither the self-propelled cleaner itself nor a place where the liquid is absent becomes dirty.

The self-propelled moving body in accordance with an aspect of the present invention can be configured to further include: a moving mechanism configured to cause the self-propelled moving body to move, the control section controlling the moving mechanism with reference to the result of detection by the humidity sensor.

With the above configuration, movement of the self-propelled moving body is controlled with reference to the result of detection by the humidity sensor. This makes it possible to finish cleaning while a place where liquid is absent becomes dirty.

The self-propelled moving body in accordance with an aspect of the present invention can be configured to further include: a suction mechanism configured to suck a detection-target surface, the control section controlling the suction mechanism with reference to the result of detection by the humidity sensor.

With the above configuration, suction by the self-propelled moving body is controlled with reference to the result of detection by the humidity sensor. Therefore, liquid is never sucked into the self-propelled moving body.

The self-propelled moving body in accordance with an aspect of the present invention can be configured such that: the humidity sensor is provided at a bottom portion of the self-propelled moving body.

With the above configuration, the humidity sensor detects the humidity, at the bottom portion of the self-propelled moving body which bottom portion is opposed to the detection-target surface. This makes it possible to more accurately detect liquid which is present on the detection-target surface.

The self-propelled moving body in accordance with an aspect of the present invention can be configured such that: the humidity sensor is provided on a front side relative to wheels of the moving mechanism, in a moving direction of the self-propelled moving body.

With the above configuration, liquid is detected on the front side relative to the wheels, in the moving direction of the self-propelled moving body. This makes it possible to prevent the wheels from becoming dirty due to the liquid.

The self-propelled moving body in accordance with an aspect of the present invention can be configured such that: the humidity sensor is provided on a front side relative to a suction opening in a moving direction of the self-propelled moving body, the suction opening being an opening through which a matter present on a detection-target surface is sucked into the self-propelled moving body.

In the above configuration, liquid is detected on the front side relative to the suction opening, in the moving direction of the self-propelled moving body. This makes it possible to prevent the liquid from being sucked into the self-propelled moving body.

The self-propelled cleaner in accordance with an aspect of the present invention can be configured such that: the humidity sensor is provided so that a distance between the humidity sensor and a detection-target surface becomes not more than 20 mm.

The above configuration makes it possible to more accurately detect liquid which is present on a surface to be cleaned.

In order to solve the above problem, a humidity sensor in accordance with an aspect of the present invention is a capacitance-change humidity sensor which is provided in a self-propelled moving body in accordance with an aspect of the present invention.

In order to solve the above problem, a liquid detection device in accordance with an aspect of the present invention includes: a humidity sensor configured to detect a humidity in a vicinity of the liquid detection device, the humidity sensor being provided so that a distance between the humidity sensor and a detection-target surface becomes not more than 20 mm; and a control section configured to control an operation of the liquid detection device with reference to a result of detection by the humidity sensor.

### Reference Signs List

1 Self-propelled cleaner (self-propelled moving body)
16 Humidity sensor
20 Control section
30 Moving mechanism
30a, 30b Wheel
32a Suction opening

## Claims

1. A self-propelled moving body, comprising:
a humidity sensor configured to detect a humidity in a vicinity of the self-propelled moving body; and
a control section configured to control an operation of the self-propelled moving body with reference to a result of detection by the humidity sensor.

2. The self-propelled moving body as set forth in claim 1, further comprising:
a moving mechanism configured to cause the self-propelled moving body to move,
the control section controlling the moving mechanism with reference to the result of detection by the humidity sensor.

3. The self-propelled moving body as set forth in claim 1 or 2, further comprising:
a suction mechanism configured to suck a detection-target surface,
the control section controlling the suction mechanism with reference to the result of detection by the humidity sensor.

4. The self-propelled moving body as set forth in any one of claims 1 to 3, wherein:
the humidity sensor is provided at a bottom portion of the self-propelled moving body.

5. The self-propelled moving body as set forth in claim 2, wherein:
the humidity sensor is provided on a front side relative to wheels of the moving mechanism, in a moving direction of the self-propelled moving body.

6. The self-propelled moving body as set forth in any one of claims 1 to 5, wherein:
the humidity sensor is provided on a front side relative to a suction opening in a moving direction of the self-propelled moving body, the suction opening being an opening through which a matter present on a detection-target surface is sucked into the self-propelled moving body.

7. The self-propelled moving body as set forth in any one of claims 1 to 6, wherein:
the humidity sensor is provided so that a distance between the humidity sensor and a detection-target surface becomes not more than 20 mm.

8. A humidity sensor provided in a self-propelled moving body as set forth in any one of claims 1 to 7, the humidity sensor being a capacitance-change humidity sensor.

9. A liquid detection device, comprising:
a humidity sensor configured to detect a humidity in a vicinity of the liquid detection device, the humidity sensor being provided so that a distance between the humidity sensor and a detection-target surface becomes not more than 20 mm; and
a control section configured to control an operation of the liquid detection device with reference to a result of detection by the humidity sensor.
